(19) Europäisches Patentamt / European Patent Office / Office européen des brevets

(11) **EP 2 690 115 B1**

(12) **EUROPEAN PATENT SPECIFICATION**

(45) Date of publication and mention
of the grant of the patent:
**21.02.2018 Bulletin 2018/08**

(51) Int Cl.:
*C08F 8/42* *(2006.01)*  *C08L 51/06* *(2006.01)*
*F16L 9/12* *(2006.01)*  *C08K 5/54* *(2006.01)*
*C08J 3/22* *(2006.01)*  *C08J 3/24* *(2006.01)*
*C08F 255/02* *(2006.01)*  *C08L 23/08* *(2006.01)*

(21) Application number: **12005388.9**

(22) Date of filing: **24.07.2012**

(54) **Slow partial cross-linking polyolefin composition for improving disinfectant resistance of an article**

Langsam partiell vernetzende Polyolefin-Zusammensetzung zur Verbesserung der Desinfektionsmittel-Resistenz eines Artikels

Composition de polyoléfine reticulée lentment et partiellement pour améliorer la résistance d'articles aux désinfectants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.01.2014 Bulletin 2014/05**

(73) Proprietor: **Borealis AG**
**1220 Vienna (AT)**

(72) Inventors:
 • **Hjertberg, Thomas**
  **456 91 Kungshamn (SE)**
 • **Costa, Francis**
  **4040 Linz (AT)**
 • **Oderkerk, Jeroen**
  **44452 Stenungsund (SE)**
 • **Tran, Anh Tuan**
  **4225 Luftenberg (AT)**
 • **Stubenrauch, Kurt**
  **4222 St. Georgen an der Gusen (AT)**

(74) Representative: **Kador & Partner**
**Corneliusstraße 15**
**80469 München (DE)**

(56) References cited:
EP-A1- 1 939 246  WO-A1-2010/000477
WO-A1-2010/149607  US-A1- 2006 258 796

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for slow partial crosslinking of a pipe made of a polyolefin composition. In particular, the present invention relates to the use of a silanol condensation catalyst for slow partial cross-linking of a polyolefin composition at room temperature.

Recent progress in the manufacturing and processsing of polymers has led to the application of plastics in virtually every aspect of modern day life. However, polymeric compounds are prone to aging under the effects of oxidants, light and heat. This results in a loss of lifetime such as loss of strength, stiffness and flexibility, discoloration and scratching as well as loss of gloss.

Besides many other applications, polyolefins are used for the preparation of pipes for drinking water distribution systems. Good drinking water quality is very important. To ensure quality of drinking water, disinfectants for removing, deactivating or killing pathogenic microorganisms are used in many countries. The used disinfectants are usually oxidizing compounds. Both chlorine ($Cl_2$) and chlorine dioxide ($ClO_2$) are effective disinfectants for drinking water systems that have been used for more than 50 years. Although chlorine is most widely used throughout the world, chlorine dioxide possesses certain advantages as disinfectant over conventional chlorination such as improved taste and odor, reduced organic by-product formation (THMs) and efficiency over a wide pH range.

However, pipes made of polyolefins and exposed to either of these disinfectants undergo premature failure due to the highly oxidizing nature of the disinfectants.

Therefore, in the past many efforts have been made to improve disinfectant resistance of polyolefin pipes.

It is well-known in the art that pipes made of cross-linked polyolefin materials, in particular made of cross-linked polyethylene materials, in general show much longer time to failure in standard pipe testing for chorine and chlorine dioxide resistance than pipes made of non cross-linked polyethylene.

The cross-linked polyethylene pipes are produced such that the cross-linking reaction occurs depending on the cross-linking method either straight after extrusion or in a second process step. In peroxide cross-linked systems (PE-Xa) the cross-linking takes inline place straight after extrusion, whereas in silane cross-linked systems (PE-Xb) typically a heat treatment in a sauna is done, and in radiation cross-linked systems (PE-Xc) the pipes are exposed to radiation in second step. The cross-linking reaction is in all cases carried out before the pipe is installed.

However, the previously known major drawback of a fully cross-linked system is that pipes are not weldable anymore.

Therefore, in order to obtain a pipe showing weldability properties, the use of non cross-linked polyolefin, especially polyethylene materials for the production of the pipe is preferred in the art. It is well known that the life time of such non cross-linked polyolefin pipes can be significantly improved by using additives packages including modifiers and stabilizers.

The stabilizers, like antioxidants, which are traditionally and currently used, comprise sterically hindered phenolics, aromatic amines, hindered amine stabilizers, organo-phosphites/phosphonites and thioethers. In for example EP 1 024 165, WO 97/49758 or WO 2008/103128 suitable stabilizers are disclosed.

However, appropriate combinations of stabilizers have to be carefully selected, depending on the desired final properties of the polymeric article. Moreover, the used disinfectants react also with the commonly used stabilizer system at much faster rate than normal oxidation process, and thus, even though the non cross-linked polyethylene pipe samples include additives the performances of standard cross-linked polyethylene pipes exposed to disinfectants are much better.

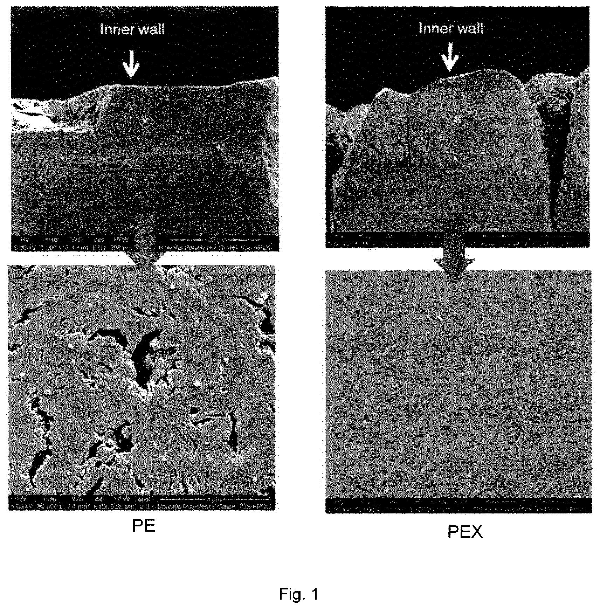

Post failure analysis of the pipes exposed to chlorine dioxide revealed that better performance of cross-linked polyethylene pipes is more related to its cross-linked structure than the additive package used in the compound. It has been observed that even in the failed cross-linked polyethylene pipe sample, the region below the degraded inner wall surface remains unaffected and no evidence of penetration of disinfectant media into the bulk of pipe was observed through regions where no cracks were formed. On the contrary, in non cross-linked polyethylene pipes the disinfectant medium not only penetrates deeper into the pipe wall through numerous crack formations, but also through regions where apparently no crack formation was observed (see Figure 1).

WO2009/072073 and US 2009/149588 disclose a plastic pipe for use in residential potable water applications, which contains a primary stabilizer and a polyolefin which is cross-linked. The cross-linkable polyolefin formulation comprises a sulphur containing primary stabilizer and a secondary stabilizer, which could be a hindered amine light stabilizer or nanoparticles (metal oxide, more specifically ZnO).

US 2004/020547 discloses a pipe of tubing of cross-linkable polyethylene containing less than 2 wt% of carbon black which provides resistance to oxidizing agents, like chlorine and chlorine dioxide.

WO 2004/090032 refers to chlorine-resistant, silane-crosslinked polyolefin tubing for drinking water or industrial water, wherein the formulation contains polyethylene, silane, peroxide, catalyst, phenolic-, sulphur- and phosphorus-based stabilizers and metal deactivator.

WO 2004/009356 describes a multilayered cross-linked polyethylene pipe for water distribution system including thin tubular core of high density polyethylene and an outer layer of cross-linked polyethylene.

All above described polyolefin materials show good resistance towards disinfectants used in drinking water systems. However, all pipes made of these materials are not weldable, and can also not be reprocessed.

Therefore, it is the object of this invention to combine the beneficial effect of the three-dimensional network structure of cross-linked systems in its resistance against disinfectants, with the processability and weldability and mechanical properties of unimodal and multi-modal non cross-linked polyethylene.

If the conventional PEX materials disclosed in the above mentioned patent applications are not or only partially cross-linked and therefore weldable, the mechanical properties of these materials, like pressure resistance, are significantly reduced. It is object of this invention to combine the polymer design of polyethylene pressure pipe materials with controlled partial cross-linking.

The present invention is based on the finding that the object of the invention can be achieved, if the cross-linking reaction of-the polyolefin material is carried out at a slow and controlled rate to a low maximum cross-linking degree after production of the article.

Therefore, the present invention relates to a process for the production of a cross-linked pipe wherein a polyolefin composition which comprises

(A) a cross-linkable polyolefin base resin having hydrolysable silicon-containing groups and
(B) a silanol condensation catalyst being a fatty acid with 14 to 20 carbon atoms

is formed to pipe, and

the pipe is cross-linked to a cross-linking degree of not more than 35 % in a water bath at ambient temperature, wherein the cross-linking degree is measured by decalin extraction according to ASTM D 2765-11, with the exception that after the extraction with decalin for 6 hours the extraction was continued another hour in pure, boiling decalin.

Further, the present invention relates to a crosslinked pipe produced by said process.

Still further, the present invention relates to the use of a polyolefin composition for the production of a cross-linked pipe having a cross-linking degree of not more than 35 % wherein the composition comprises

(A) a cross-linkable polyolefin base resin having hydrolysable silicon-containing groups and

(B) a silanol condensation catalyst being a fatty acid with 14 to 20 carbon atoms,

wherein the cross-linking degree is measured by decalin extraction according to ASTM D 2765-11, with the exception that after the extraction with decalin for 6 hours the extraction was continued another hour in pure, boiling decalin.

Additionally the present invention relates to the use of a silanol condensation catalyst for cross-linking a polyolefin composition to a cross-linking degree of not more than 35 % wherein the polyolefin composition comprises

(A) a cross-linkable polyolefin base resin having hydrolysable silicon-containing groups and

(B) a silanol condensation catalyst being a fatty acid with 14 to 20 carbon atoms

wherein the cross-linking degree is measured by decalin extraction according to ASTM D 2765-11, with the exception that after the extraction with decalin for 6 hours the extraction was continued another hour in pure, boiling decalin.

In contrast to production processes of silane cross-linked PE-X according to the state of the art, wherein after production of the pipe the cross-linking step is carried out immediately at temperatures of at least 95°C and 100% humidity, resulting in cross-linking degrees of more than 60 %, the inventive composition shows slow and controlled cross-linking over time to a low cross-linking degree of at most 35 % when the pipe is stored at ambient temperature after the production of the pipe.

For the cross-linking reaction the produced pipe, such as an extruded pipe (or pipe segment), is stored in a water bath at ambient temperature.

This means that even at a long lasting exposure to water over several weeks the cross-linking degree of the pipe according to the invention does not exceed an upper limit of 35 %. The cross-linking reaction can therefore be conducted immediately after the production of the pipe or at a later stage, e.g. at the construction site of the pipe to a desired cross-linking degree of 35 % or lower. The low upper limit of the cross-linking degree has the effect that e.g. the welding capability of a pipe having a cross-linking degree according to the invention is comparable to that of non cross-linked polyolefin pipes.

The pipe according to the present invention exhibits the advantages of pipes made of an uncross-linked polyolefin material, like good processability and weldability before installation, as well as the advantages of pipes made of cross-linked polyolefin material, such as mechanical strength and resistance against disinfectant as required e.g. in drinking water systems after installation.

The cross-linked pipe according to the invention is preferably an injection moulded pipe or an extruded pipe. It is especially preferred that the pipe is a water pipe and most preferably a drinking water pipe.

Fig. 1: Sectional analysis of the pipes failed in ClO$_2$ tested at 90 °C (PE: uncross-linked polyethylene, PEX: cross-linked polyethylene).

Fig. 2: Cross-linking degree over time at elevated temperatures of tapes made of a polyethylene composition containing 5 w% stearic acid catalyst master batch

Fig. 3: Cross-linking degree over time of the inner surface of pipes made of a polyethylene composition containing 5 w% stearic acid catalyst master batch stored in water bath at 23°C

Fig. 4: Cross-linking degree over time of the middle of the wall thickness of pipes made of a polyethylene composition containing 5 w% stearic acid catalyst master batch stored in water bath at 23°C

Fig 5: Crystallinity over time of the inner surface of pipes made of a polyethylene composition containing 5 w% stearic acid catalyst master batch stored in water bath at 23°C

Fig. 6: Crystallinity over time of the middle of the wall thickness of pipes made of a polyethylene composition containing 5 w% stearic acid catalyst master batch stored in water bath at 23°C

Fig. 7: Tensile stress at yield of test specimens made of welded pipes made of a polyethylene composition containing 5 w% stearic acid catalyst master batch stored in water bath at 23°C

The pipe according to the invention preferably has a cross-linking degree of not more than 33 %, more preferably of not more than 30 % after its production.
Furthermore, it is preferred that the pipe according to the invention has a cross-linking degree of at least 4 %, more preferably of at least 5 %.
According to the present invention the silanol condensation catalyst is used in an amount of 0.05 to 5.0 wt% based on the total weight of the polyolefin composition. It is more preferred that the silanol condensation catalyst is used in amount of 0.07 to 3.0 wt%, even more preferred in amount of 0.1 to 1.0 wt%, most preferred in an amount of 0.13 to 0.5 wt% based on the total weight of the polyolefin composition.
Furthermore, the silanol condensation catalyst is a fatty acid with 14 to 20 carbon atoms such as palmitic acid, stearic acid or arachidic acid. It is mostly preferred that the catalyst is stearic acid.
Without being bound to theory it seems that when catalyzing the cross-linking reaction the carboxylic acid silanol condensation catalyst shows rather slow reaction kinetics compared to conventional silanol condensation catalysts.
Further, compared to conventional silanol condensation catalysts used in the art carboxylic acids like fatty acids are comparatively environmentally friendly and cause no healths problems.
The silanol condensation catalyst may be used as a single type or in combination with another type. It may also be used in combination with another silanol condensation catalyst as known in the art.
The silanol condensation catalyst is preferably added to cross-linkable polyolefin in form of a master batch (e.g. mixed with a polymer) such as a homo- or copolymer of ethylene, e.g. ethylene-butyl acrylate copolymer (EBA) containing 3 to 30 wt% of butyl acrylate. Thereby, the silanol condensation catalyst is preferably present in the master batch in an amount of 1 to 10 wt%, more preferably 1.5 to 7 wt%.
The polyolefin composition which is used for the production of the pipe comprises a cross-linkable polyolefin base resin having hydrolysable silicon-containing groups.
The hydrolysable silicon-containing groups may be introduced in the polyolefin base resin either by co-polymerization or graft polymerization.
According to a preferred embodiment of the present invention, the silicon group-containing polyolefin base resin may be obtained by copolymerizing of an olefin, e.g. suitable ethylene, and an unsaturated silicon compound represented by the formula (I):

$$R^1SiR^2_qY_{3-q} \qquad (I)$$

wherein $R^1$ is an ethylenically unsaturated hydrocarbyl, hydrocarbyloxy or (meth)acryloxy hydrocarbyl group, $R^2$ is an aliphatic saturated hydrocarbyl group, Y which may be the same or different, is a hydrolysable organic group and q is 0, 1 or 2. If there is more than one Y group, these do not have to be identical.

Special examples of the unsaturated silicon compound are those wherein $R^1$ is vinyl, allyl, isopropenyl, butenyl, cyclohexenyl or gamma-(meth)acryloxy propyl; Y is methoxy, ethoxy, formyloxy, acetoxy, propionyloxy or an alkly- or arylamino group; and $R^2$, if present, is a methyl, ethyl, propyl, decyl or phenyl group.

A preferred unsaturated silicon compound is represented by the formula (II)

$$CH_2=CHSi(OA)_3 \qquad (II)$$

wherein A is a hydrocarbyl group having 1 to 8 carbon atoms, preferably 1 to 4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyl-trieethoxysilane, and vinyl triacetoxysilane.

The copolymerization of the olefin and the unsaturated silicon compound may be carried out under any suitable conditions resulting in the copolymerization of two monomers.

In another preferred embodiment the cross-linkable polyolefin base resin having hydrolysable silicon-containing groups may be obtained by grafting an unsaturated silicon compound, preferably as defined above onto the polyolefin backbone. If using a graft polymer, this may have been produced by every known method, e.g. by any of the two methods described in US 3,646,155 and US 4,117,195, respectively.

The hydrolysable silicon-containing groups-containing cross-linkable polyolefin base resin may comprise from 0.001 to about 5 wt%, more preferably from 0.01 to 1.8 wt%, even more preferably from 0.1 to 1.0 wt% and most preferably from 0:1 to 0.5 wt% of the hydrolysable silicon-containing groups based on the total weight of the cross-linkable polyolefin.

According to the present invention, the used polyolefin base resin may be a homo- or copolymer.

Furthermore, the polyolefin base resin is preferably a polyethylene, polypropylene, polybutylene base resin, or a copolymer of these with another comonomer, more preferably the polyolefin base resin is a polyethylene homo- or copolymer base resin.

The used comonomers include (a) vinyl carboxylate esters, such as vinyl acetate and vinyl pivalate, (b) alpha-olefins, such as propene, 1-butene, 1-hexene, 1-octene and 4-methyl-1-pentene, (c) (meth)acrylates, such as methyl(meth)acrylate, ethyl (meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-methyl styrene.

Preferably, the polyolefin base resin is a copolymer of ethylene and one or more alpha-olefin comonomers, preferably of one or more $C_4$ to $C_{10}$ alpha olefin comonomers.

Preferably, the comonomer is selected from the group of 1-butene, 1-hexene, 4-methyl-1-pentene, 1-octene and 1-decene. Most preferably, the comonomer is 1-butene and/or 1-hexene.

Moreover, the polyolefin base resin is preferably a multimodal polyolefin base resin.

Multimodal resins are frequently used e.g. for the production of pipes due to their favorable physical and chemical properties as e.g. mechanical strength, corrosion resistance and long-term stability. Such compositions are described e.g. in EP 0 739 937 and WO 02/102891. The term molecular weight used herein generally denotes the weight average molecular weight Mw.

Usually a polyolefin base resin used for pipe or injection moulding applications, in particular polyethylene base resin, comprises at least two polyolefin fractions, which have been produced under different polymerization conditions resulting in different weight average molecular weights for the fractions, is referred to as "multimodal". The prefix "multi" relates to the number of different polymer fractions the composition is consisting of. Thus, for example, a base resin consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In a preferred embodiment the polyolefin base resin consists of two polyethylene fractions, the fraction having a lower weight average molecular weight is denoted fraction (A), the other is denoted fraction (B). Both fractions could be homo-and/or copolymer fractions.

It is preferred that the polyolefin base resin is an "in-situ"-blend. Such blends are preferably produced in a multistage process. However, an "in-situ"-blend may also be produced in one reaction stage by using two or more different kind of catalyst.

The polymerization catalysts for the production of the polyolefin base resin include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

Preferably, the cross-linkable polyolefin base resin having hydrolysable silicon-containing groups may be prepared by a silicon-grafting procedure and then preferably has a density of 920 kg/m$^3$ or more, more preferably of 930 kg/m$^3$ or more, still more preferably of 940 kg/m$^3$ or more, still more preferably of 950 kg/m$^3$ or more. The density may also be between 920 to 960 kg/m$^3$.

The cross-linkable polyolefin base resin having hydrolysable silicon-containing groups may also be obtained by a polymerization of olefin monomers and silicon group-containing monomers and then preferably has a density of 900 to 940 kg/m$^3$.

Furthermore, the cross-linkable polyolefin base resin having hydrolysable silicon-containing groups of the present invention preferably has an $MFR_5$ (190 °C, 5 kg) of from 0.1 to 10.0 g/10 min, more preferably from 0.2 to 6.0 g/10 min, still more preferably of 0.3 to 3 g/10 min, even more preferably 0.4 to 2.0 g/10 min and most preferably from 0.4 to 1.0 g/10 min.

Further preferred, the base resin has a $MFR_{21}$ of 1 to 100 g/10 min, more preferably of 2 to 50 g/10 min, and most preferably of 5 to 30 g/10 min.

The flow rate ratio $FRR_{21/5}$ (the ratio between $MFR_{21}$ and $MFR_5$) of the cross-linkable base resin which is indicative for the broadness of the molecular weight distribution of a polymer is preferably from 5 to 60, more preferably from 15 to 55, even more preferably from 30 to 50.

It is preferred that the polyolefin composition according to the invention comprises more than 80 wt%, more preferred 85 to 100 wt%, even more preferred 90 to 99 wt% of the cross-linkable polyolefin base resin having hydrolysable silicon-containing groups based on the total weight of the polyolefin composition.

The cross-linkable base resin may consist of a base resin that has hydrolysable silicon-containing groups or may be a mechanical blend of a polyolefin resin that has hydrolysable silicon-containing groups with a polymer resin without hydrolysable silicon-containing groups.

Furthermore, it is preferred that the polyolefin composition comprises further additives, such as stabilizers selected from the group consisting of carbon black, nanoparitcles, sterically hindered phenolics, aromatic amines, hindered amine stabilizers, organo-phosphites/phosphonites and thioethers for improving the resistance towards disinfectants of the pipe.

Especially preferred stabilizers for improving resistance towards disinfectants are selected from Pentaerythrityl-tetrakis(3-(3',5'-di-tert. butyl-4-hydroxyphenyl)-propionate (CAS-no. 6683-19-8 (Irganox 1010)); 1,3,5-tri-methyl-2,4,6-tris-(3,5-di-tert. butyl-4-hydroxyphenyl) benzene (CAS-no. 1709-70-2 (Irganox 1330)); 1,3,5-Tris(3',5'-di-tert. butyl-4'-hydroxybenzyl)-isocyanurate (CAS-no. 27676-62-6 (Irganox 3114)); Tris (2,4-di-t-butylphenyl) phosphite (CAS-no. 31570-04-4 (Irgafos 168)); 2,5,7,8-Tetramethyl-2(4',8',12'-trimethyltridecyl)chroman-6-ol (CAS-no. 10191-41-0 (Irganox E201)); Bis(2,4-dicumylphenyl)pentaerythritol diphosphite (CAS-no. 154862-43-8 (Doverphos 9228)); 1,3,5-Tris(4-tert. butyl-3-hydroxy-2,6-dimethylbenzyl)-1,3,5-triazine-2,4,6-(1H,3H,5H)-trione (CAS-no. 40601-76-1 (Cyanox 1790)); N,N'-bis (3(3',5'-di-tert. butyl-4'-hydroxyphenyl)propionyl) hydrazine (CAS-no.32687-78-8 (Irganox MD1014)); Di-stearyl-thio-di-propionate (CAS-no. 693-36-7 (Irganox PS802)); Butylated reaction product of p-cresol and dicyclopentadiene (CAS-no. 68610-51-5 (Lowinox CPL)).

Furthermore, the polyolefin composition of the present invention comprises additives selected from the group consisting of conventional additives, fillers, minerals and/or lubricants, which may be added to the composition for improving mechanical and environmental properties as well as processability of the composition and pipe.

The amount of such additives usually is 10 wt% or below based on the total weight of the polyolefin composition.

The pipes according to the invention may comprise a pigment or may be natural (i.e. non-colored).

Pipes are preferably black as well as natural (i.e. non-colored) or colored pipes.

Preferably, the pipe is used in a drinking water supply system as in drinking water pipes and hot or cold water pipe.

The pipe according to the present invention shows an improved resistance against chlorine and chlorine dioxide-containing water and mechanical properties after installation as well as improved weldability before installation and after installation e.g. repair of the pipe. Thereby it has been found that in the cross-linked pipe according to the invention the crystallinity of the polyolefin composition is not impaired by the cross-linking reaction.

Preferably, after cross-linking the polyolefin composition has a crystallinity of at least 50%, more preferably of at least 55 %, determined by DSC

After welding two segments of a pipe according to the invention the welded pipe preferably shows a tensile stress at yield of at least 15 MPa, more preferably of at least 16 MPa, determined according to ISO 527-2.

Preferably the pipe, the polyolefin composition and the silanol condensation catalyst include all embodiments as described above.

The present invention is also related to a process for the production of a cross-linked pipe wherein a polyolefin composition which comprises

(A) a cross-linkable polyolefin base resin having hydrolysable silicon-containing groups and

(B) a silanol condensation catalyst being a fatty acid with 14 to 20 carbon atoms

is formed to a pipe, and

the pipe is crosslinked to a cross-linking degree of not more than 35 % in a water bath at ambient temperature, wherein the cross-linking degree is measured by decalin extraction according to ASTM D 2765-11, with the exception that after the extraction with decalin for 6 hours the extraction was continued another hour in pure, boiling decalin.

Ambient temperature means that the water of the water bath is neither cooled nor heated but is allowed to adapt the temperature of the surrounding. Usually the temperature should be in the range of 15 to 30°C, preferably 18 to 25°C.

Thereby the polyolefin composition and the pipe of the present invention are preferably produced in a process comprising a compounding step, wherein the cross-linkable polyolefin base resin which is typically obtained as a base resin powder from the reactor, together with additives as described above is extruded in an extruder. Subsequently the obtained mixture is preferably combined with the silanol condensation catalyst and extruded in a pipe extruder to produce a pipe or pipe segments or injection moulded to form an injection moulded pipe. After production, the pipe is preferably taken off over a calibrating sleeve and cooled. The cross-linking reaction can take place immediately after its production or at a later stage, e.g. at the construction site.

Extrusion of a pipe or injection moulding of an injection moulded pipe are conducted according to conventional production methods as known in the art.

It is thereby preferred that during storing of the pipe no or almost no cross-linking reaction (i.e. to a cross-linking degree of less than 1 %) takes place.

The maximum degree of cross-linking that can be achieved by cross-linking the pipe according to the invention in a water bath at ambient temperature is 35% so that the pipe is weldable at any time.

Even at harsher cross-linking conditions (e.g. at temperatures of more than 50°C) the maximum degree of cross-linking that can be achieved by cross-linking the pipe according to the invention in a water bath is 35%.

A pipe can also be manufactured in an extrusion winding process in diameters of 2 to 3 m or more. A pipe can also be manufactured in an extrusion winding process to calibration step, e.g. for the manufacture of multilayer pipes of corrugated twin-wall or multilayer wall design, with or without hollow section, or multilayer pipes with ribbed design.

The pipe produced by the process according to the invention preferably includes all embodiments as described above. The same also counts for the polyolefin composition and the silanol condensation catalyst.

Further, the present invention is related to the use of a polyolefin composition for the production of a cross-linked pipe having a cross-linking degree of not more than 35 % wherein the composition comprises

(A) a cross-linkable polyolefin base resin having hydrolysable silicon-containing groups and

(B) a silanol condensation catalyst being a fatty acid with 14 to 20 carbon atoms

wherein the cross-linking degree is measured by decalin extraction according to ASTM D 2765-11, with the exception that after the extraction with decalin for 6 hours the extraction was continued another hour in pure, boiling decalin.

Thereby, it is preferred that the cross-linking reaction is carried out at ambient conditions in contact with water after the production of the pipe.

Further, the pipe, the polyolefin composition and the silanol condensation catalyst preferably include all embodiments as described above.

Still further, the present invention is related to the use of a silanol condensation catalyst for cross-linking a polyolefin composition to a crosslinking degree of not more than 35 % wherein the polyolefin composition comprises

(A) a cross-linkable polyolefin base resin having hydrolysable silicon-containing groups and

(B) a silanol condensation catalyst being a fatty acid with 14 to 20 carbon atoms

wherein the cross-linking degree is measured by decalin extraction according to ASTM D 2765-11, with the exception that after the extraction with decalin for 6 hours the extraction was continued another hour in pure, boiling decalin.

Thereby, it is preferred that the cross-linking reaction is carried out at ambient conditions in contact with water.

The polyolefin composition is preferably processed to an article, preferably a pipe or an injection moulded article, preferably injection moulded pipe, prior to the cross-linking reaction.

It is thereby preferred that the polyolefin composition, the silanol condensation catalyst and the article, preferably a pipe or an injection moulded article, preferably injection moulded pipe, refer to all embodiments as defined above.

**Examples**

**1. Definitions and measurement methods**

**a) Density**

Density is measured according to ISO 1183-1:2004 (method A) on compression moulded specimen prepared according to EN ISO 1872-2 (February 2007) and is given in $kg/m^3$.

**b) Melt Flow Rate/Flow Rate Ratio**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and may be determined at different loadings such as 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

**c) Welding procedure of the pipes**

For welding pipes with dimensions of 20 mm diameter x 2.8 mm wall thickness are cut into segments of 20 cm length. The ends of the segments to be welded together are sharped and flat cut as known in the art. The welding process was conducted according to DVS 2207-1 by butt fusion welding.

| Pipe dimension (d x t) | Bead-up force | Bead-height around | Heating time | Max. Moving time | Pressure build-up time | Welding force | Cooling time |
|---|---|---|---|---|---|---|---|
| (mm) | [kp] | (mm) | (s) | (s) | (s) | [kp] | (min) |
| 20 x 2.8 | 3 | 0.5 | 28 | 4 | 4 | 3 | 3 |

Description of the whole welding process of pipes

The butt fusion welding of pipe samples can be realised at five following steps:

*Bead-up Force:* Pipes of 20 x 2.8 mm are cut into pieces with the length of 15-20 cm per each specimen. Two specimens are then positioned with head-to-head direction on two separate fixtures of the welding machine. A pre-heated metal plate (215°C) is inserted in the middle of the two pipe-ends which is followed by its contact with two pipe specimens at a "push" pressure of 3 kp (or 3 daN).

*Heating:* Pipe-ends are heated and melted until a "bead-up" height is observed at around 0.5 mm. This step usually takes time between 23 and 28 seconds.

*Moving*: The "push" pressure is released, two pipe specimens are separated and the heating plate is removed from its position. This step takes about 2-4 seconds.

*Pressure build-up*: The two pipe-ends already "molten" are then in contact again with a "push" pressure of 3 kp (or 3 da N) for about 3-5 seconds.

*Cooling time*: pipes are kept under constant "push" pressure for their cooling at ambient condition. It usually takes 2-3 minutes for 20 x 2.8 mm pipes. Then, take the welded pipe sample out of the welding machine for further uses.

### d) Crystallinity

The melting temperature Tm and the crystallisation temperature Tc are measured with a Mettler TA820 differential scanning calorimetry device (DSC) on $3 \pm 0.5$ mg samples according to ISO 11357-3:1999. Crystallisation and melting temperatures are obtained during 10 °C/min cooling and heating scans between 30 °C and 225 °C. Melting and crystallisation temperatures are taken as the peaks of the endotherms and exotherms.

The degree of crystallinity is obtained according to the following calculation:

$$\text{Crytallinity (\%)} = (\Delta H_c / \Delta H^\circ_f) * 100$$

Where $\Delta H_c$ (J/g) is the heat of fusion measured on samples; and $\Delta H^\circ_f$ is the heat of fusion of 100% crystalline polyethylene (which is 293 J/g).

The crystallinity is checked at two different positions of the pipe wall: one layer of inner pipe surface within the thinkness of 0.3 mm and another one in the middle of the pipe wall (also within the thicknesss of 0.3 mm). Each layer was taken by using the turning method.

### e) Cross-linking degree

For determining the cross-linking degree either extruded tapes with a thickness of 1.7 mm or pipes with dimensions of 20 mm diameter x 2.8 mm wall thickness are examined. For the pipes the cross linking degree of the inner surface and of the middle of the wall (i.e. at a thickness of 1.4 mm) has been determined. In order to take the samples out of inner surface and out of middle pipe wall, turning method is used. Inner layer used for analysis is taken within a thickness of about 0.3 mm from inner surface. The same thickness is also taken at the middle of the pipe wall.

The cross-linking degree is measured by decalin extraction according to ASTM D 2765-11, with the exception that after the extraction with decalin for 6 hours, the extraction was continued another 1 hour in pure, boiling decalin. The crosslinking degree is determined according to the following calculation:

$$\text{X-link \%} = [(\text{weight of polymer remained after extraction}) \times 100]/(\text{weight of polymer before extraction})$$

### f) Tensile test pipes: non welded and welded

Tensile test on non welded and welded pipes (20 x 2.8 mm) were performed at the strain rate of 100 mm/min and at a gauge length of 200 mm. An extension meter was used to increase the testing accuracy. The sample clamping system was sophisticatedly fabricated for executing tensile testing directly on pipe.

**Description Tensile testing of pipes/tubes**

The following description of the pipe tensile test method is similar to ASTM D 638-10 and is adopted for the internal equipment. The test specimens for these tests are whole pipes/tubes and whole welded pipes/tubes. In the following points the used test equipment is listed:

1) Wedge grips with a triangular cut-out to center the test specimen so that the major axis coincides with the direction of extension through the centreline of the grip assembly.

2) Pin with a diameter of the inner pipe (to protect the test specimen on both ends against fracture at the jaws) and a minimum length of the clamping height. The pins are not fixed with the jaws and are not connected to each other.

Before putting the pins at each side of the test specimen and clamping it in the jaws, it is necessary to check the test specimens (non welded and welded pipes/tubes) that they have no premature fracture or other damages

The test specimen has a clamping distance of 200 mm with a test speed of 100 mm/min. The test speed is similar to ISO 527-1 to get more or less equal strain rates (ISO 527: 115 mm clamping distance with 50 mm/min).

To get more information about the E-modulus and the tensile strength it is necessary to use an extensometer with a gauge length of 50 mm. Using an extensometer has one more key benefit: wedge grips have a small slippage to get higher clamping forces, which has an influence on the strain measurement by the cross-head.

After the test specimen has reached the tensile strength the extensometer is declamping the test specimen and the test continues until it breaks.

Description tensile test machine:

Zwick Universalprufmaschine Z030 with 5 kN force measuring box
Clamping distance 200 mm; Pre-load 20N at 1mm/min
Extensometer with gauge length 50 mm till strain at yield
Test speed 100 mm/min

**2. Production of polymer compositions, tapes and pipes**

As cross-linkable polyethylene base resins having hydrolysable silicon-containing groups and silanol condensation catalyst the following products were used:

**(a) Materials:**

Polymer 1 refers to the blend of polymer A with 30 wt% HDPE M-1 of Example 2 in EP1512711 A1. Polymer A has a density of 930 kg/m$^3$, a MFR$_2$ of 1.9 g/10 min and an amount of vinyl trimethoxysilane (VTMS) of 1.9 wt%. The HDPE M-1 has a density of 954 kg/m$^3$, a MFR$_2$ of 4 g/10 min.

Polymer 2: commercially available bimodal polyethylene composition ME 3440 having a density of 951 kg/m$^3$ and a MFR$_5$ of 0.85 g/10 min (available from Borealis AG, Wien).

Polymer 2 is grafted with vinyl trimethoxysilane (VTMS) on a TSK 60 extrusion line to a final content of grafted silane of 0.1 wt%, 0.25 wt% and 0.5 wt% VTMS, based on the total weight of the grafted polyethylene.

This line is equipped with a liquid pump permitting the spray of silane cocktail (Dynasylan SILFIN 2,4 delivered by Evonik Degussa GmbH) on the molten polyethylene resin in the extruder. Additives (0.11 wt% Irganox 1010; 0.11 wt% Irgafos 168, delivered by BASF SE; and 0.15 wt% CaStearat) were also incorporated in the polymer melt at the end of extrusion process. Pellets getting out of the extruder were then dried in 90°C air before being used for the next steps.

Following are important processing parameters of grafting and compounding process:

- Temperature profile: 120°C / 120°C / 160°C / 180°C / 200°C / 230°C / 240°C / 250° / 260°C / 260°C / 280°C / 280°C / 280°C

- Throughput: 120-125 kg/h

- Screw speed: 200 rpm

Catalyst masterbatch is produced by compounding 0.31 wt% of stearic acid with 96.9 wt% ethylene-butyl acrylate copolymer having 17 wt% butyl acrylate in the extruder line Prism 24. Melting temperature is set at around 120°C. Polymer strands getting out of the extruder die are cooled with blowing dry air by avoiding water contact before pelletising. Pellets are then stocked in aluminium packages to keep them away from moisture penetration.

Material A contains polymer 1 with 70 wt% of polymer A having 1.9 wt% VTMS and 30 wt% of HDPE M-1 without any hydrolysable silane groups and 5% stearic acid catalyst masterbatch.

Material B contains polymer 2 with 0.1 wt% VTMS and 5% stearic acid catalyst masterbatch.

Material C contains polymer 2 with 0.25 wt% VTMS and 5% stearic acid catalyst masterbatch.

Material D contains polymer 2 with 0.5 wt% VTMS and 5% stearic acid catalyst masterbatch.

**(b) Preparation of the tapes**

For the preparation of the tapes used in experiments (3a) and (3b) below Material A is extruded to tapes with a thickness of 1.7 mm. The tape extrusion process was performed on the COLLIN Teach-line E20T benchtop extruder. Parameters for tape extrusion were as follows:

- Temperature profile: 60°C / 170°C / 180°C / 190°C / 190°C / 190°C

- Screw speed: 50 rpm

For the cross-linking tests the tapes are cut to stripes having a length of 50 mm and a width of 50 mm.

**(c) Extrusion of the pipes**

For the preparation of the pipes used in experiments (3c) to (3e) below Materials B, C and D were extruded to pipes with dimensions of 20 mm diameter and 2.8 mm wall thickness. The pipe extrusion process was performed on the Battenfeld high speed line BEX 1-60-35B (Screw diameter 60 mm, L/D 35). Parameters for pipe extrusion were as follows:

- Cooling: bath 1 (10°C) and bath 2 (20°C) with vacuum, baths 3, 4 & 5 at 10°C without vacuum

- Line speed: 14.9 m/min.

- Melt Temperature: 208°C

- Pressure: 144 bar

- Output: 140 kg/hr

- Screw speed: 723 rpm

The stearic acid catalyst masterbatch was fed into the pipe extruder with the aid of a separated additive feeder to the main hopper of the extruder. It was then melt mixed with the different resins of VTMS-grafted polymer 2 during the extrusion process.

**3. Test Results**

**a) Cross-linking degree of tapes stored in climate room, temperature: 23°C, humidity: 50 %**

The climate room conditions were chosen because this experimental scenario is comparable with storage conditions of pipes. The degree of cross-linking was determined after storing tapes of Material A 1, 2, 4, 6 and 8 weeks at 23°C at 50 % humidity, results are shown in Table 1.

Table 1: Cross-linking degree of tapes made from Material A (Climate room (23°C, 50% humidity))

| Temperature | Time | Cross-linking degree (Material A) |
|---|---|---|
| 23°C | 7d | 0 |
| 23°C | 14d | 0.4 |
| 23°C | 28d | 0.5 |

(continued)

| Temperature | Time | Cross-linking degree (Material A) |
|---|---|---|
| 23°C | 42d | 0.5 |
| 23°C | 56d | 0.5 |

The degree of cross-linking of the material containing 5 wt% of catalyst master batch shows almost no cross-linking under these conditions.

This experimental scenario is comparable with storage conditions of pipes; therefore as desired the material does not cross-link to high degrees and retains its ability to be welded (during installation).

**b) Cross-linking degree of tapes stored in water bath, 20°C, 40°C, 60°C, 95°C**

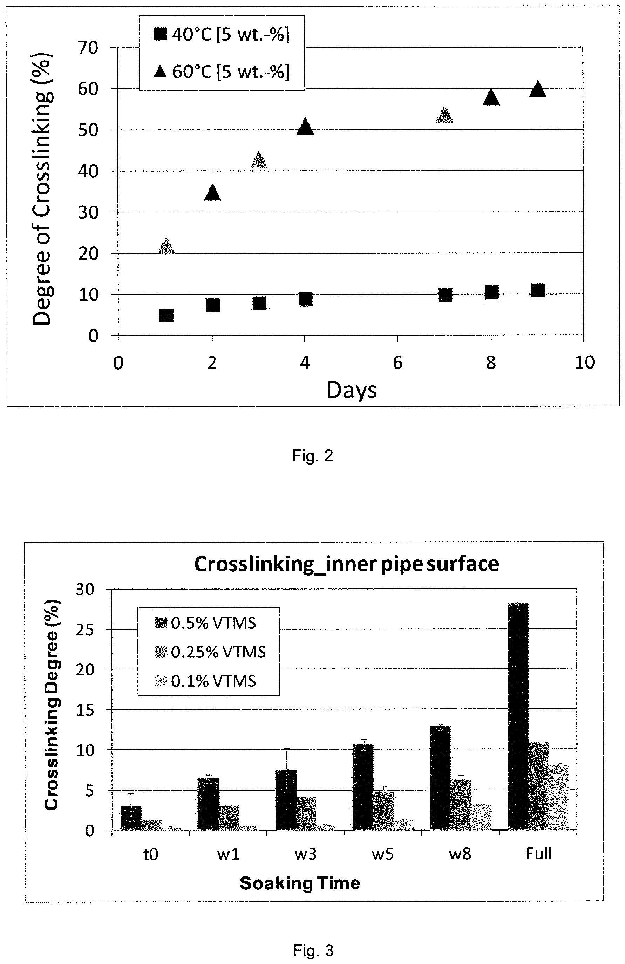

Tapes of Material A were stored in water at different temperatures and the degree of cross-linking was monitored over time. The results are shown in Table 2 and Fig. 2.

Table 2: Cross-linking degree of tapes made from Material A (water bath, different temperatures)

| Temperature | Time | Cross-linking degree (Material A) |
|---|---|---|
| 20°C | 3d | 2.2 |
| 20°C | 7d | 3.0 |
| 20°C | 10d | 4.2 |
| 20°C | 14d | 4.0 |
| 20°C | 17d | 4.1 |
| 20°C | 21d | 5.3 |
| | | |
| 40°C | 1d | 5.1 |
| 40°C | 2d | 6.7 |
| 40°C | 3d | 7.0 |
| 40°C | 4d | 8.6 |
| 40°C | 7d | 10.9 |
| 40°C | 8d | 9.4 |
| 40°C | 9d | 11.3 |
| | | |
| 60°C | 1d | 21.9 |
| 60°C | 2d | 35.5 |
| 60°C | 3d | 43.1 |
| 60°C | 4d | 50.2 |
| 60°C | 7d | 54.1 |
| 60°C | 8d | 58.4 |
| 60°C | 9d | 60.2 |
| | | |
| 95°C | 8h | 53.5 |

At high temperatures (95 °C) high degrees of cross-linking are quickly reached. This condition was only chosen to prove the ability of stearic acid as a cross-linking catalyst. The Examples demonstrate that a silanol condensation catalyst used in an amount of 0.05 to 0.50 wt% in a cross-linkable polyolefin composition has a high efficiency at low temperature, particular at ambient temperature and slightly elevated temperatures, in respect of slow cross-linking.

**c) Cross-linking degree of pipes stored in water bath 23 °C and 85°C**

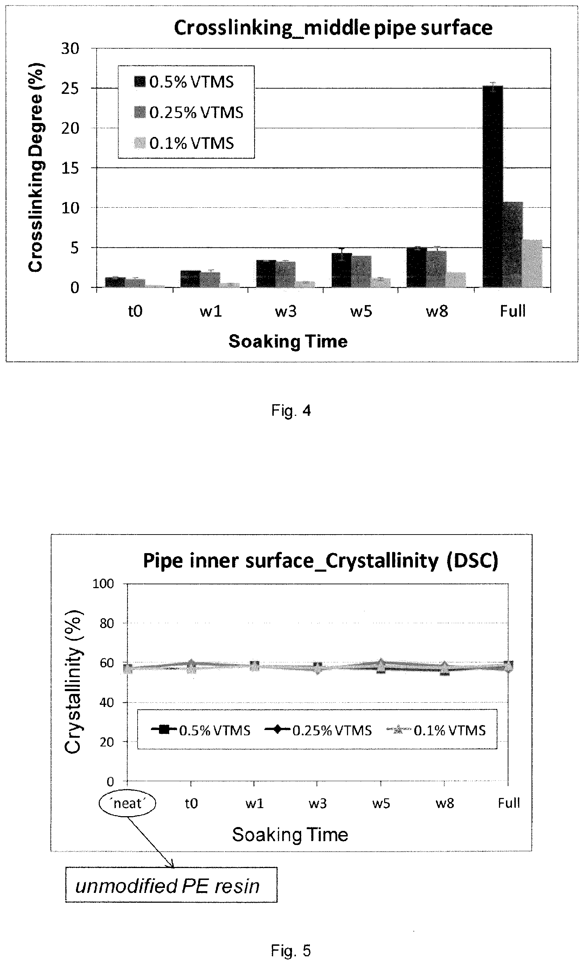

Pipes of Material B, C and D were stored in water at ambient temperature (about 23°C) and the degree of cross-linking of the inner pipe surface and the middle of the pipe was monitored over time. For determining the maximum degree of cross-linking pipes of Material B, C and D were stored in water at 85°C and the degree of cross-linking of the inner pipe surface and the middle of the pipe was determined after 8 h storage. The results are shown in Table 3 and Fig. 3 and 4.

Table 3: Cross-linking degree of pipes made from Material B, C and D (water bath, ambient temperature)

| Time | Cross-linking degree (Material B) | | Cross-linking degree (Material C) | | Cross-linking degree (Material D) | |
|---|---|---|---|---|---|---|
| | Inner wall | Middle wall | Inner wall | Middle wall | Inner wall | Middle wall |
| 23°C to | 0.2 | 0.2 | 1 | 1 | 3 | 1 |
| 23°C 1 week | 0.5 | 0.5 | 3 | 2 | 7 | 2 |
| 23°C 3 weeks | 0.7 | 0.7 | 4 | 3 | 8 | 3 |
| 23°C 5 weeks | 1 | 1 | 5 | 4 | 11 | 4 |
| 23°C 8 weeks | 3 | 2 | 6 | 5 | 12 | 5 |
| 85°C, 8h | 8 | 6 | 11 | 10 | 28 | 25 |

It can be seen that for an amount of 0.5 wt% of silane groups (Material D) the maximum degree of cross-linking is about 28 % at the inner pipe surface and 25 % in the middle of the pipe after the cross-linking reaction is completed. Due to the low cross-linking degree the cross-linked pipes are still weldable. Further, the cross-linking degree depends on the amount of cross-linkable silane groups of the polyolefin composition so that the degree of cross-linking of the system can be controlled by the amount of cross-linkable groups.

**d) Crystallinity of pipes stored in water bath 23 °C**

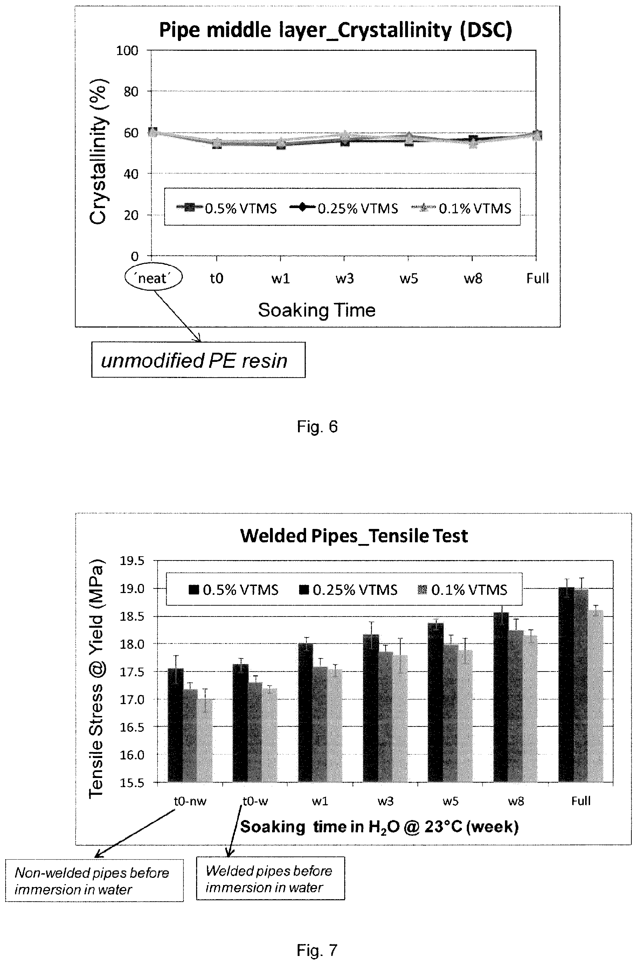

For the pipes of experiment (3c) further the crystallinity is monitored over the time. The crystallinity is shown in Fig. 5 for the inner pipe surface and in Fig. 6 for the middle of the wall thickness. It can be seen that over the time the crystallinity keeps constant so that it can be concluded that the crystallinity is not impaired by the cross-linking process.

**e) Welding of pipe segments stored in water bath 23 °C**

The pipes of experiment (3c) are further cut into segments and welded together by butt fusion welding. The tensile stress at yield of the welded pipes is shown in Fig. 7. It can be seen that that the tensile stress at yield of the welded test specimens is even higher than that of the accordant non-welded, non-cross-linked test specimen. Thus, the welding properties are not impaired by the cross-linking process. Thus, it can be concluded that the mechanical performance surprisingly increases with the cross-linking degree.

**Claims**

1.  Process for the production of a cross-linked pipe wherein
    a polyolefin composition which comprises

        (A) a cross-linkable polyolefin base resin having hydrolysable silicon-containing groups and
        (B) a silanol condensation catalyst being a fatty acid with 14 to 20 carbon atoms

is formed to pipe, and
the pipe is cross-linked to a cross-linking degree of not more than 35 % in a water bath at ambient temperature, wherein the cross-linking degree is measured by decalin extraction according to ASTM D 2765-11, with the exception that after the extraction with decalin for 6 hours the extraction was continued another hour in pure, boiling decalin.

2. Process according to claim 1 wherein the silanol condensation catalyst is stearic acid.

3. Process according to any one of the preceding claims wherein the silanol condensation catalyst is present in an amount of 0.05 to 5.0 wt% based on the total weight of the polyolefin composition.

4. Process according to any one of the preceding claims wherein the pipe has a cross-linking degree of at least 4 %.

5. Process according to any one of the preceding claims, wherein the cross-linkable polyolefin base resin is a cross-linkable polyethylene base resin.

6. Process according to any one of the preceding claims, wherein the amount of the hydrolysable silicon-containing groups in the cross-linkable polyolefin base resin is from 0.001 to 5 wt% based on the total weight of the cross-linkable polyolefin base resin.

7. Process according to any one of the preceding claims, wherein the hydrolysable silicon-containing groups have been introduced into the cross-linkable polyolefin base resin by incorporation of an unsaturated silicon-compound represented by the formula:

$$R^1 SiR^2{}_q Y_{3-q} \qquad (I)$$

wherein

$R^1$ is an ethylenically unsaturated hydrocarbyl, hydrocarbyloxy or (meth)acryloxy hydrocarbyl group,
$R^2$ is an aliphatic saturated hydrocarbyl group,
Y which may be the same or different, is a hydrolysable organic group and
q is 0, 1 or 2.

8. Process according to any one of the preceding claims, wherein the polyolefin composition comprises further additives selected from the group consisting of carbon black, nanoparticles, sterically hindered phenolics, aromatic amines, hindered amine stabilizers, organophosphites/phosphonites and thioethers.

9. Process according to any one of the preceding claims, wherein the polyolefin composition after cross-linking has a crystallinity of at least 50%, determined by DSC.

10. Process according to any one of the preceding claims, wherein the pipe is a drinking water pipe.

11. A cross-linked pipe produced by the process according to any one of the preceding claims.

12. Use of a polyolefin composition for the production of a cross-linked pipe having a cross-linking degree of not more than 35 % wherein the composition comprises

(A) a cross-linkable polyolefin base resin having hydrolysable silicon-containing groups and
(B) a silanol condensation catalyst being a fatty acid with 14 to 20 carbon atoms,

wherein the cross-linking degree is measured by decalin extraction according to ASTM D 2765-11, with the exception that after the extraction with decalin for 6 hours the extraction was continued another hour in pure, boiling decalin.

13. Use of a silanol condensation catalyst for cross-linking a polyolefin composition to a cross-linking degree of not more than 35 % wherein the polyolefin composition comprises

(A) a cross-linkable polyolefin base resin having hydrolysable silicon-containing groups and
(B) a silanol condensation catalyst being a fatty acid with 14 to 20 carbon atoms

wherein the cross-linking degree is measured by decalin extraction according to ASTM D 2765-11, with the exception that after the extraction with decalin for 6 hours the extraction was continued another hour in pure, boiling decalin.

**Patentansprüche**

1. Verfahren für die Herstellung von einem vernetzten Rohr, wobei eine Polyolefinzusammensetzung, die das Folgende umfasst:

   (A) ein vernetzbares Polyolefinbasisharz, das hydrolysierbare, siliziumhaltige Gruppen aufweist, und
   (B) einen Silanol-Kondensationskatalysator, der eine Fettsäure mit 14 bis 20 Kohlenstoffatomen ist,

   zu einem Rohr geformt wird, und
   das Rohr in einem Wasserbad bei Umgebungstemperatur auf einen Vernetzungsgrad von nicht mehr als 35 % vernetzt wird, wobei der Vernetzungsgrad mittels Decalinextraktion gemäß ASTM D 2765-11 gemessen wird, mit der Ausnahme, dass nach der Extraktion mit Decalin für 6 Stunden die Extraktion für eine weitere Stunde in reinem, kochendem Decalin fortgesetzt wurde.

2. Verfahren nach Anspruch 1, wobei der Silanol-Kondensationskatalysator eine Stearinsäure ist.

3. Verfahren nach einem der vorhergehenden Ansprüche, wobei der Silanol-Kondensationskatalysator mit einer Menge von 0,05 bis 5,0 Gew.-% vorliegt, basierend auf dem Gesamtgewicht der Polyolefinzusammensetzung.

4. Verfahren nach einem der vorhergehenden Ansprüche, wobei das Rohr einen Vernetzungsgrad von mindestens 4 % aufweist.

5. Verfahren nach einem der vorhergehenden Ansprüche, wobei das vernetzbare Polyolefinbasisharz ein vernetzbares Polyethylenbasisharz ist.

6. Verfahren nach einem der vorhergehenden Ansprüche, wobei die Menge der hydrolysierbaren, siliziumhaltigen Gruppen in dem vernetzbaren Polyolefinbasisharz 0,001 bis 5 Gew.-% beträgt, basierend auf dem Gesamtgewicht von dem vernetzbaren Polyolefinbasisharz.

7. Verfahren nach einem der vorhergehenden Ansprüche, wobei die hydrolysierbaren, siliziumhaltigen Gruppen in das vernetzbare Polyolefinbasisharz eingeführt wurden, indem eine ungesättigte Siliziumverbindung eingeführt wurde, die durch die folgende Formel repräsentiert ist:

$$R^1SiR^2qY_{3-q} \qquad (I)$$

   wobei

   $R^1$ eine ethylenisch ungesättigte Hydrocarbyl-, Hydrocarbyloxy- oder (Meth)acryloxyhydrocarbylgruppe ist,
   $R^2$ eine aliphatische, gesättigte Hydrocarbylgruppe ist,
   Y, das gleich oder verschieden sein kann, eine hydrolysierbare organische Gruppe ist und
   q 0, 1 oder 2 ist.

8. Verfahren nach einem der vorhergehenden Ansprüche, wobei die Polyolefinzusammensetzung weitere Zusatzstoffe umfasst, die aus der Gruppe ausgewählt sind, bestehend aus Ruß, Nanopartikeln, sterisch gehinderten Phenolen, aromatischen Aminen, gehinderten Aminstabilisatoren, Organophosphiten/Phosphoniten und Thioethern.

9. Verfahren nach einem der vorhergehenden Ansprüche, wobei die Polyolefinzusammensetzung nach dem Vernetzen eine Kristallinität von mindestens 50 % aufweist, bestimmt mittels DSC.

10. Verfahren nach einem der vorhergehenden Ansprüche, wobei das Rohr ein Trinkwasserrohr ist.

11. Vernetztes Rohr, hergestellt durch das Verfahren nach einem der vorhergehenden Ansprüche.

12. Verwendung von einer Polyolefinzusammensetzung für die Herstellung von einem vernetzten Rohr, das einen Vernetzungsgrad von nicht mehr als 35 % aufweist, wobei die Zusammensetzung das Folgende umfasst:

(A) ein vernetzbares Polyolefinbasisharz, das hydrolysierbare, siliziumhaltige Gruppen aufweist, und
(B) einen Silanol-Kondensationskatalysator, der eine Fettsäure mit 14 bis 20 Kohlenstoffatomen ist,

wobei der Vernetzungsgrad mittels Decalinextraktion gemäß ASTM D 2765-11 gemessen wird, mit der Ausnahme, dass nach der Extraktion mit Decalin für 6 Stunden die Extraktion für eine weitere Stunde in reinem, kochendem Decalin fortgesetzt wurde.

13. Verwendung von einem Silanol-Kondensationskatalysator für das Vernetzen von einer Polyolefinzusammensetzung auf einen Vernetzungsgrad von nicht mehr als 35 %, wobei die Polyolefinzusammensetzung das Folgende umfasst:

(A) ein vernetzbares Polyolefinbasisharz, das hydrolysierbare, siliziumhaltige Gruppen aufweist, und
(B) einen Silanol-Kondensationskatalysator, der eine Fettsäure mit 14 bis 20 Kohlenstoffatomen ist,

wobei der Vernetzungsgrad mittels Decalinextraktion gemäß ASTM D 2765-11 gemessen wird, mit der Ausnahme, dass nach der Extraktion mit Decalin für 6 Stunden die Extraktion für eine weitere Stunde in reinem, kochendem Decalin fortgesetzt wurde.

**Revendications**

1. Procédé pour la production d'un tuyau réticulé, dans lequel une composition de polyoléfine qui comprend

(A) une résine de base en polyoléfine réticulable ayant des groupes contenant du silicium hydrolysables, et
(B) un catalyseur de condensation de silanol qui est un acide gras avec 14 à 20 atomes de carbone

est mise sous la forme d'un tuyau, et
le tuyau est réticulé jusqu'à un degré de réticulation ne dépassant pas 35 % dans un bain d'eau à la température ambiante,
dans lequel le degré de réticulation est mesuré par extraction à la décaline conformément à la norme ASTM D 2765-11, sauf qu'après l'extraction à la décaline pendant 6 heures, l'extraction est poursuivie pendant encore une heure dans de la décaline bouillante pure.

2. Procédé selon la revendication 1, dans lequel le catalyseur de condensation de silanol est l'acide stéarique.

3. Procédé selon l'une quelconque des revendications précédentes, dans lequel le catalyseur de condensation de silanol est présent en une quantité de 0,05 à 5,0 % en poids par rapport au poids total de la composition de polyoléfine.

4. Procédé selon l'une quelconque des revendications précédentes, dans lequel le tuyau a un degré de réticulation d'au moins 4 %.

5. Procédé selon l'une quelconque des revendications précédentes, dans lequel la résine de base en polyoléfine est une résine de base en polyéthylène réticulable.

6. Procédé selon l'une quelconque des revendications précédentes, dans lequel la quantité des groupes contenant du silicium hydrolysables dans la résine de base en polyoléfine réticulable est de 0,001 à 5 % en poids par rapport au poids total de la résine de base en polyoléfine réticulable.

7. Procédé selon l'une quelconque des revendications précédentes, dans lequel les groupes contenant du silicium hydrolysables ont été introduits dans la résine de base en polyoléfine réticulable par incorporation d'un composé du silicium insaturé représenté par la formule :

$$R^1 SiR^2_q Y_{3-q} \qquad (I)$$

dans laquelle

$R^1$ est un groupe à insaturation éthylénique hydrocarbyle, hydrocarbyloxy ou (méth)acryloxy-hydrocarbyle,

$R^2$ est un groupe hydrocarbyle à saturation aliphatique,
Y, qui peut être identique ou différent, est un groupe organique hydrolysable, et
q vaut 0, 1 ou 2.

8. Procédé selon l'une quelconque des revendications précédentes, dans lequel la composition de polyoléfine comprend en outre des additifs choisis dans l'ensemble constitué par le noir de carbone, les nanoparticules, les phénoliques à encombrement stérique, les amines aromatiques, les stabilisants de type amine encombrée, les organophosphites/phosphonites, et les thioéthers.

9. Procédé selon l'une quelconque des revendications précédentes, dans lequel la composition de polyoléfine après réticulation a une cristallinité, déterminée par DSC, d'au moins 50 %.

10. Procédé selon l'une quelconque des revendications précédentes, dans lequel le tuyau est un tuyau pour eau de boisson.

11. Tuyau réticulé produit par le procédé selon l'une quelconque des revendications précédentes.

12. Utilisation d'une composition de polyoléfine pour la production d'un tuyau réticulé ayant un degré de réticulation ne dépassant pas 35 %, dans laquelle la composition comprend

(A) une résine de base en polyoléfine réticulable ayant des groupes contenant du silicium hydrolysables, et
(B) un catalyseur de condensation de silanol qui est un acide gras avec 14 à 20 atomes de carbone

dans laquelle le degré de réticulation est mesuré par extraction à la décaline conformément à la norme ASTM D 2765-11, sauf qu'après l'extraction à la décaline pendant 6 heures, l'extraction est poursuivie pendant encore une heure dans de la décaline bouillante pure.

13. Utilisation d'un catalyseur de condensation de silanol pour réticuler une composition de polyoléfine jusqu'à un degré de réticulation ne dépassant pas 35 %, dans laquelle la composition de polyoléfine comprend

(A) une résine de base en polyoléfine réticulable ayant des groupes contenant du silicium hydrolysables, et
(B) un catalyseur de condensation de silanol qui est un acide gras avec 14 à 20 atomes de carbone

dans laquelle le degré de réticulation est mesuré par extraction à la décaline conformément à la norme ASTM D 2765-11, sauf qu'après l'extraction à la décaline pendant 6 heures, l'extraction est poursuivie pendant encore une heure dans de la décaline bouillante pure.

Fig. 1

Fig. 2

Fig. 3

Fig. 4

Fig. 5

EP 2 690 115 B1

Fig. 6

Fig. 7

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1024165 A
- WO 9749758 A
- WO 2008103128 A
- WO 2009072073 A
- US 2009149588 A
- US 2004020547 A
- WO 2004090032 A
- WO 2004009356 A
- US 3646155 A
- US 4117195 A
- EP 0739937 A
- WO 02102891 A
- WO 2004055068 A
- WO 2004055069 A
- EP 0810235 A
- EP 1512711 A1

**Non-patent literature cited in the description**

- *CHEMICAL ABSTRACTS,* 6683-19-8
- *CHEMICAL ABSTRACTS,* 1709-70-2
- *CHEMICAL ABSTRACTS,* 27676-62-6
- *CHEMICAL ABSTRACTS,* 31570-04-4
- *CHEMICAL ABSTRACTS,* 10191-41-0
- *CHEMICAL ABSTRACTS,* 154862-43-8
- *CHEMICAL ABSTRACTS,* 40601-76-1
- *CHEMICAL ABSTRACTS,* 32687-78-8
- *CHEMICAL ABSTRACTS,* 693-36-7
- *CHEMICAL ABSTRACTS,* 68610-51-5